(19) **Europäisches Patentamt**

**European Patent Office**

**Office européen des brevets**

(11) **EP 1 458 476 B1**

(12) **EUROPEAN PATENT SPECIFICATION**

(45) Date of publication and mention
of the grant of the patent:
**13.07.2005 Bulletin 2005/28**

(51) Int Cl.⁷: **B01J 23/38**, B01J 20/04,
F01N 3/08, B01D 53/94

(21) Application number: **02802329.9**

(22) Date of filing: **21.10.2002**

(86) International application number:
**PCT/GB2002/004750**

(87) International publication number:
**WO 2003/037507 (08.05.2003 Gazette 2003/19)**

(54) **EXHAUST LINE FOR AN INTERNAL COMBUSTION ENGINE**

ABGASLEITUNG FÜR VERBRENNUNGSMOTOR

LIGNE D'ECHAPPEMENT POUR MOTEUR A COMBUSTION INTERNE

(84) Designated Contracting States:
**AT BE BG CH CY CZ DE DK EE ES FI FR GB GR
IE IT LI LU MC NL PT SE SK TR**

(30) Priority: **27.10.2001 GB 0125890**

(43) Date of publication of application:
**22.09.2004 Bulletin 2004/39**

(73) Proprietor: **JOHNSON MATTHEY PUBLIC
LIMITED COMPANY
London SW1Y 5BQ (GB)**

(72) Inventors:
• **CHIFFEY, Andrew, Francis, Johnson Matthey Plc
Royston SG8 5HE (GB)**

• **PHILLIPS, Paul, Richard
Royston SG8 7XU (GB)**

(74) Representative: **Nunn, Andrew Dominic
Johnson Matthey Technology Centre,
Blount's Court,
Sonning Common
Reading RG4 9NH (GB)**

(56) References cited:
**EP-A- 0 758 713        EP-A- 0 893 154
EP-A- 0 984 146        EP-A- 1 008 379
EP-A- 1 033 161        EP-A- 1 079 084
WO-A-00/21647        WO-A-02/18753
DE-A- 19 636 041        DE-A- 19 941 439**

**Description**

The present invention relates to an exhaust system for a lean burn internal combustion engine, and in one illustrative embodiment, to an exhaust system for a diesel engine.

Lean burn internal combustion engines, such as diesel engines and gasoline engines, produce a number of pollutants including carbon monoxide (CO), unburnt hydrocarbon (HC), particulate matter (PM) and nitrogen oxides (NOx). Whilst not as visible to the naked eye as PM emitted by diesel engines, gasoline engines produce PM of the size-order of < 1µm such as 10-100nm. Interest in gasoline PM is growing as particles of this size can penetrate deep into the human lungs and can be detrimental to health.

The amount of these pollutants that can be emitted by vehicular internal combustion engines is prescribed by legislation in various countries and regions of the world, such as the USA and Europe, and these amounts are set to decrease as the legislation tightens step-wise over the next ten years or so. Similarly, International agreements between countries have led to moves toward vehicular internal combustion engines that use fuel more efficiently. The legislation acts as a stimulus to vehicle manufacturers and to their suppliers to devise new engines that are more fuel-efficient and that emit fewer pollutants and to exhaust systems that can clean up the exhaust gas before it passes to atmosphere.

One such exhaust system component primarily for treating diesel exhaust comprises an oxidation catalyst for oxidising NO in the exhaust gas to $NO_2$ and a downstream filter for trapping PM. A process for treating diesel PM that uses this arrangement is described in EP-B-0341832 or US-A-4,902,487. The process comprises passing an exhaust gas, such as a diesel exhaust gas, including PM and NO unfiltered over an oxidation catalyst to convert the NO to $NO_2$, collecting soot on the filter and combusting the collected soot by reaction with the $NO_2$. This technology is commercially available as Johnson Matthey's Continuously Regenerating Trap or CRT®. Further steps may be added, for example downstream NOx removal by injection of reductant e.g. HC or NOx-specific reactant e.g. $NH_3$ or urea (see for example our WO-A-00/21647). An advantage of this process is that it is possible to combust diesel soot at temperatures of up to 400°C, whereas combustion of diesel soot in oxygen occurs at about 500°C. This is significant since diesel exhaust gas is generally cooler than exhaust gas from gasoline engines and soot would accumulate on the filter causing back-pressure problems in the system if the process relied on combustion of soot in oxygen.

One form of gasoline engine is a gasoline direct injection engine, which is designed to operate under stoichiometric and lean conditions. When running lean, relatively low levels of NOx are formed that cannot be reduced (removed) in the presence of the relatively high levels of oxygen in the exhaust gas. Reducing species, e.g. HC, can reduce NOx to $N_2$ during stoichiometric- or rich-running conditions, as comparatively less oxygen is present than during lean-running conditions.

In order to control NOx in lean-burn engines, there has been devised a NOx absorber/catalyst which can store NOx, e.g. as nitrate, when an engine is running lean. In a stoichiometric or rich environment, the nitrate is understood to be thermodynamically unstable, and the stored NOx is released and is reduced by the reducing species present in the exhaust gas. This NOx absorber/catalyst is commonly called a NOx-trap and is described in EP-A-0560991. By periodically controlling the engine to run stoichiometrically or rich, stored NOx is reduced and the NOx-trap regenerated.

A typical NOx-trap formulation includes a catalytic oxidation component, such as platinum, a NOx-storage component, such as barium, and a reduction catalyst e.g. rhodium. One mechanism commonly given for NOx-storage during lean engine operation for this formulation is:

$$(i)\ NO + 1/2O_2 \rightarrow NO_2;$$

and

$$(ii)\ BaO + NO_2 + 1/2O_2 \rightarrow Ba(NO_3)_2.$$

In the first step, the nitric oxide reacts with oxygen on active oxidation sites on the platinum to form $NO_2$. The second step involves adsorption of the $NO_2$ by the storage material in the form of an inorganic nitrate.

When the engine runs under rich conditions or at elevated temperatures, the nitrate species become thermodynamically unstable and decompose, producing NO or $NO_2$ according to equation (iii) below. Under rich conditions, these nitrogen oxides are subsequently reduced by carbon monoxide, hydrogen and hydrocarbons to $N_2$, which can take place over the reduction catalyst.

$$(iii)\ Ba(NO_3)_2 \rightarrow BaO + 2NO + 3/2O_2\ or\ Ba(NO_3)_2 \rightarrow BaO + 2NO_2 + 1/2O_2;$$

and

$$\text{(iv) NO + CO} \rightarrow 1/2N_2 + CO_2 \text{ (and other reactions).}$$

In the reactions of (i)-(iv) above the reactive barium species is given as the oxide. However, it is understood that in the presence of air most of the barium is in the form of the carbonate or possibly the hydroxide. The above reaction schemes can be adapted accordingly for species of barium other than the oxide.

Using sophisticated engine management techniques to provide for rich/lean cycling and common rail fuel injection, vehicle manufacturers are now adopting NOx-trap technology into diesel exhaust systems. One such system is described in EP-A-0758713. Means for reducing the redox composition of the exhaust gas, as defined by lambda, for the purpose of regenerating a NOx-trap include injecting HC into the exhaust gas downstream of the engine, adjusting the ignition timing of at least one engine cylinder or adjusting the engine air-to-fuel ratio.

Another technique that can be used to control emissions is exhaust gas recirculation (EGR). In this, a portion of the exhaust gas is returned to the engine air intake so that the engine is fed a mixture of air and exhaust gas. Because the resulting mixture is lower in oxygen than in air, the temperature of the combustion event is reduced so that there is less NOx in the exhaust gas. This technique does cause an increase in PM, so there is a pay-off between NOx and PM, but by managing the rate of EGR to the load on the engine, it is possible to obtain an overall reduction in pollutant emissions.

In Japanese patent no. 2722987 and EP-A-1079084, Toyota describes an exhaust system including a component including a combination of certain of the catalyst features described above. Essentially it describes a catalysed particulate trap including a NOx-trap. In particular, the component comprises a particulate trapping device comprising a NOx absorbent capable of absorbing NOx contained in exhaust gas when the air-fuel ratio of the exhaust gas is lean, and capable of releasing the NOx absorbed in the NOx absorbent when the air-fuel ratio of the exhaust gas is substantially equal to the stoichiometric air-fuel ratio or rich.

The mechanism suggested for the combustion of soot trapped on the particulate trap is that during lean running, a high concentration of oxygen $O_2$ is deposited in the form of $O_2^-$ or $O^{2-}$ on the surface of platinum (Pt). NO contained in the flowing exhaust gas reacts with $O_2^-$ or $O^{2-}$ on the surface of the Pt to form $NO_2$ ($2NO + O_2 \rightarrow 2NO_2$). Then, part of the $NO_2$ thus formed is absorbed into the NOx absorbent while being oxidised on Pt, and diffused in the form of nitrate ion $NO_3^-$ while combining with BaO.

If the air-fuel ratio is adjusted rich, the oxygen concentration in the exhaust gas is reduced, and consequently the amount of $NO_2$ formed on the surface of the Pt is reduced. If the amount of $NO_2$ produced is reduced, the reaction proceeds in the reverse direction ($NO_3^- \rightarrow NO_2$) and thus the nitrate ion $NO_3^-$ is released in the form of $NO_2$ from the absorbent.

The suggestion is that "activated oxygen" species such as $O_2^-$ and $O^{2-}$ are responsible for combusting particulate during rich and lean running, but also that $NO_2$ could also be responsible for combustion of particulate, particularly during rich running.

We have investigated Toyota's combined particulate filter-NOx trap and have found, very surprisingly, that by introducing an oxidation catalyst active for oxidation of NO to $NO_2$ upstream of the filter/trap in a similar arrangement to that described in EP-B-0341832 or US-A-4,902,487 that filter regeneration is improved compared with filter regeneration employing the particulate filter-NOx trap alone. We have been able to show this by measuring the back-pressure in the system on a bench mounted engine. Increased back-pressure is an indication of increased particulate build up, i.e. that particulate deposition and particulate combustion are not in balance. It is also believed that the system represents an improvement over the system described in EP-A-758713 in that NOx released from the NOx absorbent can combust trapped particulate, but also oxidise HC to carbon dioxide ($CO_2$) and water ($H_2O$) and oxidise carbon monoxide CO to $CO_2$. Accordingly, the system provides an improved management of pollutant species in the exhaust gas.

According to the invention, there is provided an exhaust system for an internal combustion engine, which system comprising a catalysed particulate filter comprising an oxidation catalyst comprising platinum and/or palladium and a $NO_x$ absorbent comprising at least one of an alkali metal, an alkaline earth metal and a rare earth metal for absorbing $NO_x$ contained in an exhaust gas when the composition of the exhaust gas is lambda > 1, and for releasing the $NO_x$ absorbed in the $NO_x$ absorbent when the exhaust gas composition is 1 $\geq$ lambda, and a platinum group metal catalyst upstream of the filter for oxidising NO to $NO_2$ at least when the composition of the exhaust gas is lambda >1.

We believe that an exhaust system including the particulate filter-NOx trap alone is less active for particulate combustion because the combustion of trapped particulate occurs only where it is in contact with the Pt or other washcoat components. Accordingly, particulate further from the surface of the filter-trap is combusted later than that which is nearer the surface. In the present invention particulate in contact with the Pt on the trap can be combusted at the same time as particulate not in contact with the Pt, because the particulate not in contact with the Pt is combusted in exhaust gas including increased levels of $NO_2$ downstream of the oxidation catalyst.

The invention is advantageous in that by reducing back-pressure in the system, fuel economy is improved and wear on the engine is reduced or eliminated.

Known catalysts for producing $NO_2$ from NO and $O_2$ may be used to generate the $NO_2$ oxidant for the purpose of combusting particulate. Such catalysts are extensively used in the catalytic conversion of automotive exhaust gases. This includes, for example, Pt, rhodium (Rh), ruthenium (Ru), palladium (Pd) or combinations thereof, platinum group metal oxides such as $RhO_3$ and the like. Conveniently, the catalyst is coated onto a monolith substrate e.g. a ceramic or metal honeycomb.

The filter may be in conventional form and structure. Typically this comprises a ceramic wall-flow filter of appropriate pore size, but one or more wire meshes of appropriate metal e.g. stainless steel or the like can also be used.

The NOx absorbent includes alumina, for example as a support, and at least one selected from, for example, alkali metals, such as potassium (K), sodium (Na), lithium (Li) and caesium (Cs), alkaline earth metals, such as barium (Ba) and calcium (Ca), and rare earth metals, such as lanthanum (La) and yttrium (Y), and a noble metal such as Pt carried on the support. A reduction catalyst such as rhodium can also be included.

According to a further aspect, the invention provides an internal combustion engine including an exhaust system according to the invention. The engine can be a diesel engine, such as a heavy duty diesel engine (as defined by the relevant European or US Federal or California State legislation) or a diesel engine for a light duty diesel engine, such as for a passenger vehicle or van. The engine can also be a gasoline engine, such as a lean-burn gasoline engine including a gasoline direct injection engine. However, the engine can be powered by alternative fuel means such as CNG, LPG or methanol, and engines powered by these alternative fuels are within the scope of the present invention.

In a further aspect, the invention comprises a vehicle including an internal combustion engine according to the invention. However, the exhaust system can be also be used in connection with stationary power plants.

According to a further aspect, the invention provides a method of treating an exhaust gas of an internal combustion engine, which method comprising oxidising NO in the exhaust gas to $NO_2$ at least when the composition of the exhaust gas is lambda >1, trapping particulate on a catalysed filter also including a NOx absorbent, oxidising NO: to $NO_2$ on the filter when the composition of the exhaust gas is lambda > 1, absorbing the $NO_2$ in the $NO_x$ absorbent when the composition of the exhaust gas is lambda > 1, releasing the absorbed $NO_x$ as $NO_2$ when the exhaust gas composition is $1 \geq$ lambda and combusting particulate trapped on the filter in $NO_2$, optionally at exhaust gas temperatures of up to 400°C, wherein the step of oxidising NO to $NO_2$ is performed upstream of the filter.

In order that the invention may be more fully understood, the following Example is provided by way of illustration only and with reference to the accompanying Figure which shows a graph depicting the effect of pre-NO oxidation catalyst and combined NOx and particulate trap.

## EXAMPLE

A diesel particulate wall-flow filter (5.66 inches (14.38 cm) diameter by 6 inches (15.24 cm) long, 200 cells per square inch (31 cells $cm^{-2}$)) was coated with a conventional NOx trap composition comprising supported platinum and barium prepared using known incipient wetness solution impregnation and conventional coating techniques. The coated filter was dried in an airflow and calcined at 500°C.

The resulting piece, now termed a NOx particulate trap (NPT), was mounted in a stainless steel can using standard procedures, and fitted to the exhaust gas system of a bench-mounted 1.9 litre common rail diesel engine. The engine was coupled to a dynamometer in the conventional manner, with both engine and dynamometer being controlled by computer. Exhaust emissions at pre- and post-NPT positions were measured at 10 second intervals. Gas pressures and temperatures at pre- and post-NPT positions were measured over the same time interval.

The engine was operated to give cycles of lean-running and rich-running conditions. The engine was run at 2300 rpm and the torque was adjusted to give a NPT gas inlet temperature of 350°C. After 60 seconds of lean-running the engine conditions were changed to rich conditions for 2 seconds by means of fuel post-injection, air intake throttling, and increased exhaust gas recirculation (EGR) rate. After two hours of cycling 60 seconds lean and 2 seconds rich the engine was kept at lean-running conditions and the torque was increased to give a NPT gas inlet temperature of 450°C. These lean-running conditions were maintained for 1 hour. The reaction between soot and $NO_2$ during this period was monitored by the reduction in back pressure of the system.

The above test conditions were repeated on a combined system comprising of diesel oxidation catalyst (DOC) followed by a NPT filter.

The DOC was prepared by coating a cordierite monolith (5.66 inches (14.38 cm) diameter by 3 inches (7.62 cm) long, 400 cells per square inch (62 cells $cm^{-2}$)) with platinum supported on alumina using conventional coating techniques. The DOC was mounted in a stainless steel can and fitted to the exhaust gas system of the diesel engine. The NPT filter was then fitted 1 inch (2.54cm) behind the DOC. Emissions and back pressure measurements were carried out over the lean-rich cycling and lean only conditions detailed above.

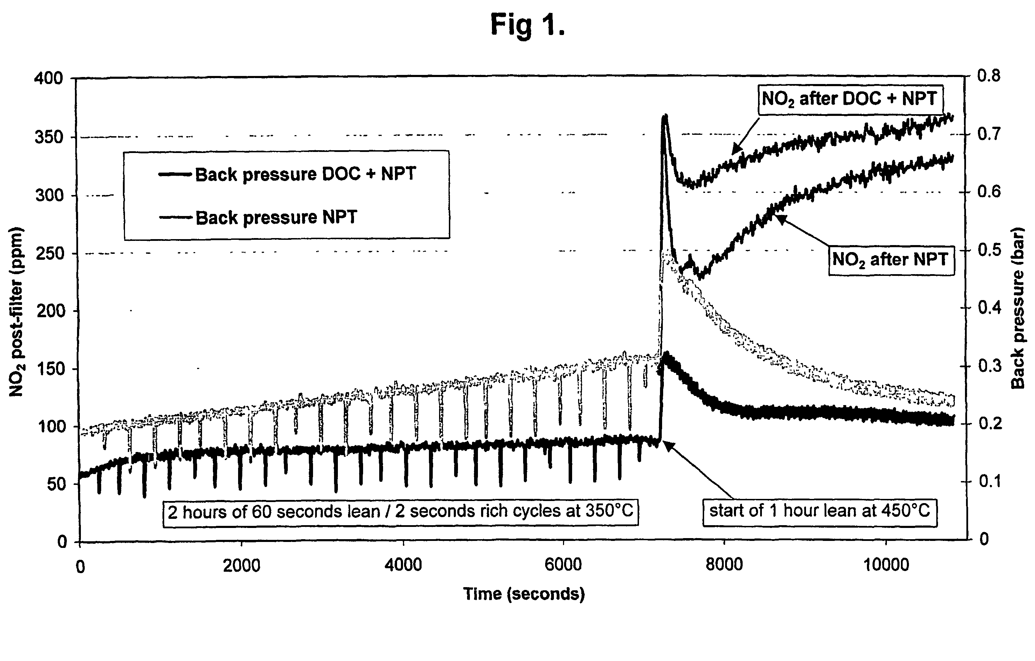

As can be seen from Figure 1, during the rich-lean cycling, the back-pressure in the system including the DOC upstream of the NPT is consistently lower than the back-pressure in the system without the DOC. Furthermore, it can be seen that following the switch to constant lean running, $NO_2$ increases downstream of the NPT in both systems. This is because the NOx absorbent is "full" or substantially all the NOx absorbent is in the nitrate form. With no rich regeneration events to reduce the nitrate and regenerate the NOx absorbent, the system including the DOC + NPT essentially becomes a CRT® as described in EP-B-341832. $NO_2$ generated over the Pt of the NOx trap on the NPT appears to be responsible for the combustion of particulate on the NPT only system. In both cases, increased $NO_2$ is detected downstream of the NPT.

**Claims**

1. An exhaust system for an internal combustion engine, which system comprising a catalysed particulate filter comprising an oxidation catalyst comprising platinum and/or palladium and a $NO_x$ absorbent comprising at least one of an alkali metal, an alkaline earth metal and a rare earth metal for absorbing $NO_x$ contained in an exhaust gas when the composition of the exhaust gas is lambda > 1, and for releasing the $NO_x$ absorbed in the $NO_x$ absorbent when the exhaust gas composition is 1 ≥ lambda, and a platinum group metal catalyst upstream of the filter for oxidising NO to $NO_2$ at least when the composition of the exhaust gas is lambda >1.

2. An exhaust system according to claim 1, wherein the particulate filter is a ceramic wall flow filter.

3. An exhaust system according to claim 1 or 2, wherein the filter comprises rhodium.

4. An exhaust system according to claim 1,2 or 3 wherein the platinum group metal catalyst comprises platinum and/or palladium.

5. An internal combustion engine including an exhaust system according to any preceding claim.

6. An engine according to claim 5, wherein it is a diesel engine, such as a heavy duty diesel engine.

7. A vehicle including an internal combustion engine according to claim 5 or 6.

8. A method of treating an exhaust gas of an internal combustion engine, which method comprising oxidising NO in the exhaust gas to $NO_2$ at least when the composition of the exhaust gas is lambda >1, trapping particulate on a catalysed filter also including a NOx absorbent, oxidising NO to $NO_2$ on the filter when the composition of the exhaust gas is lambda > 1, absorbing the $NO_2$ in the $NO_x$ absorbent when the composition of the exhaust gas is lambda > 1, releasing the absorbed $NO_x$ as $NO_2$ when the exhaust gas composition is 1 ≥ lambda and combusting particulate trapped on the filter in $NO_2$, optionally at exhaust gas temperatures of up to 400°C, wherein the step of oxidising NO to $NO_2$ is performed upstream of the filter.

**Patentansprüche**

1. Abgassystem für einen Verbrennungsmotor, wobei dieses System einen katalysierten Partikelfilter enthält, der einen Oxidationskatalysator, welcher Platin und/oder Palladium umfasst, und ein $NO_x$ Absorbens, welches wenigstens ein Alkalimetall, Erdalkalimetall und Seltenerdmetall umfasst, enthalt, zur Absorption von in einem Abgas enthaltenem $NO_x$, wenn die Zusammensetzung des Abgases lambda > 1 ist, und zur Freigabe des im $NO_x$ Absorbens absorbierten $NO_x$, wenn die Zusammensetzung des Abgases 1 ≥ lambda ist, und wobei dieses System stromaufwärts vom Filter ein Platingruppenmetall als Katalysator enthält, zur Oxidation von NO zu $NO_2$ wenigstens dann, wenn die Zusammensetzung des Abgases lambda > 1 ist

2. Abgassystem nach Anspruch 1, worin der Partikelfilter ein Wandströmungsfilter aus Keramik ist.

3. Abgassystem nach Anspruch 1 oder 2, worin der Filter Rhodium umfasst.

4. Abgassystem nach Anspruch 1, 2 oder 3, worin der Katalysator aus einem Platingruppenmetall Platin und/oder Palladium umfasst.

5. Verbrennungsmotor, der ein Abgassystem nach einem der vorhergehenden Ansprüche enthält.

**6.** Verbrennungsmotor nach Anspruch 5, der ein Dieselmotor, wie ein Hochleistungsdieselmotor, ist

**7.** Kraftfahrzeug mit einem Verbrennungsmotor nach Anspruch 5 oder 6

**8.** Verfahren zur Behandlung eines Abgases eines Verbrennungsmotors durch Oxidation von NO im Abgas zu $NO_2$ wenigstens dann, wenn die Zusammensetzung des Abgases lambda > 1 ist, Einfangen von Partikelmatenal auf einem katalysierten Filter, der auch ein $NO_x$ Absorbens enthält, Oxidation von NO zu $NO_2$ auf dem Filter, wenn die Zusammensetzung des Abgases lambda > 1 ist, Absorption des $NO_2$ im $NO_x$ Absorbens, wenn die Zusammensetzung des Abgases 1 > lambda ist, Freigabe des absorbierten $NO_x$ als $NO_2$, wenn die Zusammensetzung des Abgases 1 ≥ lambda ist, und Verbrennung des auf dem Filter eingefangenen Partikelmaterials zu $NO_2$, optional bei Temperaturen des Abgases von bis zu 400°C, wobei die Stufe der Oxidation von NO zu $NO_2$ stromaufwärts vom Filter durchgeführt wird

**Revendications**

**1.** Système d'échappement pour un moteur à combustion interne, lequel système comprend un filtre catalysé contre les matières particulaires comprenant un catalyseur d'oxydation comprenant du platine et/ou du palladium et un absorbant de $NO_x$ comprenant au moins l'un d'entre un métal alcalin, un métal alcalino-terreux et un lanthanide pour absorber le $NO_x$ contenu dans un gaz d'échappement lorsque la composition du gaz d'échappement est de lambda > 1, et pour libérer le $NO_x$ absorbé dans l'absorbant de $NO_x$ lorsque la composition du gaz d'échappement est de 1 ≥ lambda, ainsi qu'un catalyseur métallique du groupe platine en amont du filtre pour oxyder le NO en $NO_2$ au moins lorsque la composition du gaz d'échappement est de lambda > 1.

**2.** Système d'échappement selon la revendication 1, dans lequel le filtre contre les matières particulaires est un filtre traversant à paroi céramique.

**3.** Système d'échappement selon la revendication 1 ou 2, dans lequel le filtre comprend du rhodium.

**4.** Système d'échappement selon la revendication 1, 2 ou 3, dans lequel le catalyseur métallique du groupe platine comprend du platine et/ou du palladium.

**5.** Moteur à combustion interne, comprenant un système d'échappement selon l'une quelconque des revendications précédentes.

**6.** Moteur selon la revendication 5, dans lequel le moteur est un moteur diesel, tel qu'un moteur diesel de grosse cylindrée.

**7.** Véhicule comprenant un moteur à combustion interne selon la revendication 5 ou 6.

**8.** Procédé de traitement d'un gaz d'échappement d'un moteur à combustion interne, lequel procédé comprend les étapes d'oxydation du NO se trouvant dans le gaz d'échappement en $NO_2$, au moins lorsque la composition du gaz d'échappement est de lambda > 1, de piégeage des matières particulaires sur un filtre catalysé comprenant aussi un absorbant de $NO_x$, d'oxydation du NO en $NO_2$ sur le filtre lorsque la composition du gaz d'échappement est de lambda > 1, d'absorption du $NO_2$ dans l'absorbant de $NO_x$ lorsque la composition du gaz d'échappement est de lambda > 1, de libération du $NO_x$ absorbé sous forme de $NO_2$ lorsque la composition du gaz d'échappement est de 1 ≥ lambda, et de brûlage des matières particulaires piégées sur le filtre en $NO_2$, optionnellement à des températures de gaz d'échappement allant jusqu'à 400°C, dans lequel l'étape d'oxydation du NO en $NO_2$ est exécutée en amont du filtre.

Fig 1.